# EUROPÄISCHE PATENTSCHRIFT

(11) **EP 0 875 367 B1**
(45) Veröffentlichungstag und Bekanntmachung des Hinweises auf die Patenterteilung: **02.04.2003**
(21) Anmeldenummer: 98107609.4
(22) Anmeldetag: 27.04.1998
(51) Int. Cl.: B29D 30/60

(54) **Verfahren zum Herstellen eines Fahrzeugluftreifens**
Process for manufacturing vehicle tyres
Procédé pour la fabrication de pneus pour véhicules

(30) Priorität: 02.05.1997 DE 19718701
(43) Veröffentlichungstag der Anmeldung: 04.11.1998
(73) Patentinhaber: Continental Aktiengesellschaft, 30165 Hannover (DE)
(72) Erfinder: Jenke, Roland, 29693 Hademsdorf (DE); Dumler, Herbert, 30449 Hannover (DE)

(56) Entgegenhaltungen:
- EP-A- 0 239 719
- WO-A-97/06967
- US-A- 3 223 572
- US-A- 4 279 683

## Beschreibung

Die Erfindung betrifft ein Verfahren zum Herstellen eines Fahrzeugluftreifens gemäß dem Oberbegriff des Anspruchs 1 sowie ein Verfahren zum Herstellen eines Laufstreifen/Gürtelpaketringes, der auf einen Teilreifen aufgelegt wird, gemäß dem Oberbegriff des Anspruchs 2. Ferner bertrifft die Erfindung einen Fahrzugluftreifen, der nach den Verfahren hergestellt wurde.

An den Laufstreifen eines Fahrzeugluftreifens werden unterschiedliche Anforderungen gestellt. Da dieser unmittelbaren Kontakt mit der Fahrbahn hat, ist es wesentlich, dass der Laufstreifen eine hervorragende Traktion zur Fahrbahn aufweist. Damit soll gewährleistet werden, dass bei unterschiedlichen Fahrbahnoberflächen das Fahrzeug insbesondere bei Kurvenfahrten nicht ausbrechen kann. Deshalb hat es bisher nicht an Versuchen gemangelt, Laufstreifenmischungen bereitzustellen, die diesen Erfordernissen gerecht werden sollen. So wird für den Teil des Laufstreifens, der mit der Fahrbahn in Kontakt tritt, eine einzige Gummimischung verwendet. Diese Gummimischung muss nahezu alle Anforderungen hinsichtlich Naßrutschverhalten, Abrieb und Rollwiderstand, insbesondere auch einer guten Traktion, erfüllen. Dabei ist es nachteilig, dass jede Eigenschaft nur in bestimmten Grenzen variiert werden kann, um andere Charakteristika nicht zu negativ zu beeinflussen. Nachteilig ist weiterhin, dass bisher diese Laufstreifenmischung als Kalanderplatte über die gesamt Breite in Umfangsrichtung auf den Rohling gewickelt wird, so dass an beiden Enden eine Stoßstelle (Splice) auftritt. Dieser Stoß muss extra vorbehandelt werden (Einstreichen mit Benzinlösung), um eine ausreichende Haftung der beiden Enden zu gewährleisten.

Aus der EP 0 239 719 A3 ist es bekannt, dass Laufstreifen von Fahrzeugluftreifen aus mehreren Mischungen bestehen können, die eine unterschiedliche Härte aufweisen.

Der vorliegenden Anmeldung liegt die Aufgabe zugrunde, einen Fahrzeugluftreifen bereitzustellen, der eine hervorragende Haftung zur Fahrbahnoberfläche aufweist und gleichzeitig einfach und unkompliziert hergestellt werden kann, sowie ein einfaches und unkompliziertes Verfahren zu seiner Herstellung bereitzustellen.

Gelöst wird diese Aufgabe erfindungsgemäß dadurch, dass bei den Verfahren mit den Merkmalen der Ansprüche 1 und 2 der Materialstreifen aus zumindest zwei Schichten in seiner Längsrichtung aufgebaut ist, wobei eine Schicht im vulkanisierten Zustand eine höhere Härte aufweist als die andere Schicht.

Ein Verfahren zur Herstellung eines Fahrzeugluftreifens, bei dem ein Kautschukmaterialstreifen in zahlreichen im wesentlichen aneinanderliegenden Windungen um einen Teilreifen gewickelt wird, ist aus dem Stand der Technik (*R.A. Cronin: Elastomerics, August 1987, Seiten 24-27*) bereits bekannt. Die Vorteile dieses Verfahrens liegen insbesondere darin, dass nur kleine Extruder für die Laufstreifenmischungen bereitgestellt werden müssen und dem Materialstreifen warm um den Teilreifen gewickelt wird, ohne dass ein Laufstreifen mit Splice gebildet wird, was im Vergleich zu herkömmlichen Verfahren zumindest unter Umweltaspekten vorteilhaft ist, da auf ein Einstreichen mit Benzinlösung verzichtet werden kann. Erfindungsgemäß konnte dieses Verfahren in der Art abgewandelt werden, dass Fahrzeugluftreifen erhalten werden, die eine hervorragende Traktion bei verschiedenen Fahrbahnoberflächen besitzen.

Auch aus der US 3,223,572, der US 4,279,683 und der WO 97/06967 sind Verfahren zur Herstellung eines Fahrzeugluftreifens, bei dem ein Kautschukmaterialstreifen in zahlreichen im wesentlichen aneinanderliegenden Windungen um einen Teilreifen gewickelt wird bekannt. In der US 3,223,572 wird außerdem beschrieben, dass in unterschiedlichen Bereichen des Reifens Materialstreifen aus unterschiedlichen Mischungen verwendet werden können. Die Streifen selbst bestehen aber einheitlich aus einer Mischung. Die WO 97/06967 offenbart, dass der Materialstreifen mit hartem Granulat versehen wird.

Für die Herstellung eines solchen Fahrzeugluftreifens können ein oder mehrere im wesentlichen flache Materialstreifen (bevorzugtes Verhältnis zwischen Breite zur Dicke > 7 : 1) aus Kautschuk und/oder Kunststoff verwendet werden. Prinzipiell ist es dabei möglich, mehrere Materialstreifen in Längsrichtung aneinander zu setzen. Der einzelne Materialstreifen ist aus zumindest zwei Schichten in seiner Längsrichtung aufgebaut, wobei eine Schicht im vulkanisierten Zustand eine höhere Härte aufweist. Diese Schicht wird während des Fahrbetriebes des Reifens schneller abgefahren als die Schicht, die eine geringere Härte aufweist. Dabei entsteht in Axialrichtung des Reifens abwechselnd ein Bereich, der direkt mit der Fahrbahn in Kontakt steht (Schicht mit geringerer Härte) und ein Bereich, der aufgrund seiner höheren Härte bereits abgerieben ist und keinen Kontakt mehr mit der Fahrbahnoberfläche hat. Durch diese altemierende Struktur das Laufstreifens in axialer Richtung, die aufgrund einer häufigen Abwechslung zumindest zweier Gummimischungen erreicht wird, wurde eine Bodenaufstandsfläche erzielt, die eine hervorragende Haftung zur Fahrbahn aufweist.

Die unterschiedlichen Schichten können in der Art erzeugt werden, dass beide Schichten einzeln extrudiert werden und anschließend miteinander dubliert werden oder mittels Koextrusion beide Schichten zusammengeführt werden und den unvulkanisierten Materialstreifen bilden. Vorzugsweise sollen beide Schichten zu gleichen Teilen den Querschnitt des Materialstreifens bilden, damit ein ausgewogenes Verhältnis zwischen Bodenkontaktfläche und abgeriebener Schicht gewährleistet wird.

Es ist aber auch möglich, dass mehrere einzelne Materialstreifen nebeneinander, bezogen auf die Axialrichtung des Teilreifens, gewickelt werden. Dabei bestehen die einzelnen Materialstreifen jeweils aus einer homogenen Kautschukmischung, wobei eine davon im vulkanisierten Zustand die abriebsbeständigere Zone in der Laufstreifenoberfläche bildet. Dabei kann die Breite der einzelnen Materialstreifen variieren. Vorzugsweise sollen zwei einzelne Materialstreifen gleichzeitig nebeneinander aufgewickelt werden, jedoch ist es auch denkbar, erst einen Materialstreifen aufzuspulen (z. B. eine Windung) und anschließend den zweiten Materialstreifen angrenzend aufzubringen. Diese Aufbringungsvarianten sind abhängig von der Geometrie (z. B. Breite) der jeweiligen Materialstreifen.

Die Form des Materialstreifens sollte vorzugsweise, wie bereits erwähnt, ein Breiten-Dicken-Verhältnis > 7 : 1 aufweisen. Dabei soll der Materialstreifen mit seiner breiten Seite um den Teilreifen wendelförmig gewickelt werden und bei dessen anschließender Windung mit der vorhergehenden Windung bzw. bei Verwendung von mehreren Materialstreifen mit dem vorhergehenden Materialstreifen in Kontakt stehen. Dieser oder diese Materialstreifen verleihen der Laufstreifenoberfläche zwei Zonen unterschiedlicher Härte. Der verwendete Materialstreifen kann dabei unterschiedliche Querschnittsformen aufweisen. So sind z.B. mehrschichtige flache Rechtecke, Dreiecke oder Rhomben, Ellipsen bzw. kreisabschnittsförmige Geometrien denkbar.

Zur Erzeugung eines Fahrzeugluftreifens nach dem erfindungsgemäßen Verfahren wird zumindest ein Materialstreifen, durch den in Reifenquerrichtung eine Zohne erzeugt wird, die im vulkanisierten Zustand eine höhere Härte aufweist, um den Teilreifen gewickelt. Dieser Teilreifen weist eine bereits bombierte Karkasse und radial außen davon ein Gürtelpaket auf. Bei dem Begriff Gürtelpaket ist ein Gürtel und/oder Bandage gemeint, die in Gummi eingebettete metallische oder textile Festigkeitsträger enthält. Es ist auch möglich, dass zwischen diesen einzelnen Schichten (Karkasse und/oder Gürtel und/oder Bandage) Verstärkungsplatten aus Kautschuk bzw. Gummi vorhanden sind. Des Weiteren ist es auch möglich, dass als radial äußerste Schicht des Teilreifens sich eine Kautschuk- oder Gummischicht befindet. Diese kann möglicherweise im vulkanisierten Reifenlaufstreifen die Funktion einer Laufflächenunterschicht (Base-Schicht) übernehmen.

Prinzipiell ist es aber auch möglich, den Reifenaufbauprozess so zu gestalten, dass ein Laufstreifen/Gürtelringpaket auf einen Teilreifen, der bereits eine bombierte Karkasse aufweist, aufgelegt wird. In diesem Fall wird der Laufstreifen durch Wickeln eines oder mehrerer Materialstreifen um das Gürtelringpaket erzeugt. Erfindungsgemäß besteht der Materialstreifen entweder aus zumindest zwei Schichten aus Kautschuk und/oder Kunststoff, wobei eine Schicht im vulkanisierten Zustand eine höhere Härte als die andere aufweist oder es werden zumindest zwei einzelne Materialstreifen mit entsprechenden Härtecharakteristika verwendet. Die Trennfläche dieser Schichten bzw. Materialstreifen befindet sich in der Laufstreifenoberfläche. Der Vorteil dieser Verfahrensweise liegt darin, dass einzelne Reifenbauteile unabhängig voneinander gefertigt werden können und eine bedarfsgerechte Reifenherstellung erfolgen kann.

Das erfindungsgemäße Verfahren kann für die Herstellung von Neureifen, d.h. die Aufbringung des Materialstreifens erfolgt auf einen unvulkanisierten Teilreifen, verwendet werden. Es ist aber auch möglich, dieses Verfahren für vor- bzw. fertigvulkanisierte Teilreifen anzuwenden. Somit werden sowohl Neureifen als auch runderneuerte Reifen bereitgestellt, die eine hervorragende Haftung zur Fahrbahnoberfläche aufweisen.

Anhand einer Zeichnung soll ein Ausführungsbeispiel näher erläutert werden. Es zeigt
Figur 1 einen schematischen Aufbau einer Vorrichtung für die Durchführung des erfindungsgemäßen Verfahrens und
Figur 2 schematisch den Querschnitt eines vulkanisierten Reifens, der durch das erfindungsgemäße Verfahren hergestellt worden ist.

Aus einem Duplex-Extruder 1 wird ein Materialstreifen 2 gefördert, der aufgrund des Extruder-Mundstückes einen runden Querschnitt aufweist. Dieser Materialstreifen 2 besteht in seiner Längsrichtung zu ca. gleichen Teilen aus zwei verschiedenen Kautschukmischungen, die schichtweise aneinander grenzen. Über Umlenkrollen 3 und ein nicht näher dargestelltes Walzwerk wird der extrudierte Rundschnurmaterialstreifen (Duchmesser ca. 1 cm) in eine flache Rechteckquerschnittsform (ca. 16 x 2 mm) überführt. Über einen Auflagekopf 4 wird der Teilreifen, der frei drehbar gelagert ist, angetrieben. Über eine Computersteuerung 6 wird ausgehend von der Extrusion des Materialstreifens 2 über den beweglichen Auflagekopf 4 der flachgewalzte Materialstreifen mit seiner breiten Seite auf den Teilreifen 5 gespult. Das Aufspulen des Materialstreifens 2 erfolgt in der Art, dass ein bis zwei Windungen des Materialstreifens 2 auf die Seitenwand des Teilreifens 5 gespult werden und daran anschließend der Reifenlaufstreifen von einer axialen Begrenzung in Reifenumfangsrichtung zu seiner anderen axialen Begrenzung aufgewickelt wird. Über die Computersteuerung 6 wird festgelegt, in welchem Maße die aneinander grenzenden aus Schichten aufgebauten Materialstreifenwindungen überlappen. Dabei ist es aber auch möglich, dass die Materialstreifenwindungen nur auf Stoß in Reifenumfangsrichtung aneinander grenzen. Der Auflagekopf 4 wird so gesteuert, dass dieser pro Umdrehung des Teilreifens 5 insgesamt 1 bis 15 mm in Axialrichtung des Reifens verschoben wird. Durch ein geeignetes Steuersystem 6 ist es möglich, die Laufstreifendicke zu beeinflussen bzw. den Auflagekopf 4 mehrere Male von einer axialen Seite zur anderen den Materialstreifen aufwickeln zu lassen. Durch einen nicht näher beschriebenen Anrollvorgang wird der Materialstreifen 2 auf den Teilreifen 5 gedrückt. Anschließend kann die Vulkanisation des fertig gewickelten Reifenrohlings erfolgen. Erzielt werden Fahrzeugluftreifen, die aufgrund unterschiedlicher Mischungszusammensetzung in der Reifenoberfläche hervorragende Haftungseigenschaften aufweisen.

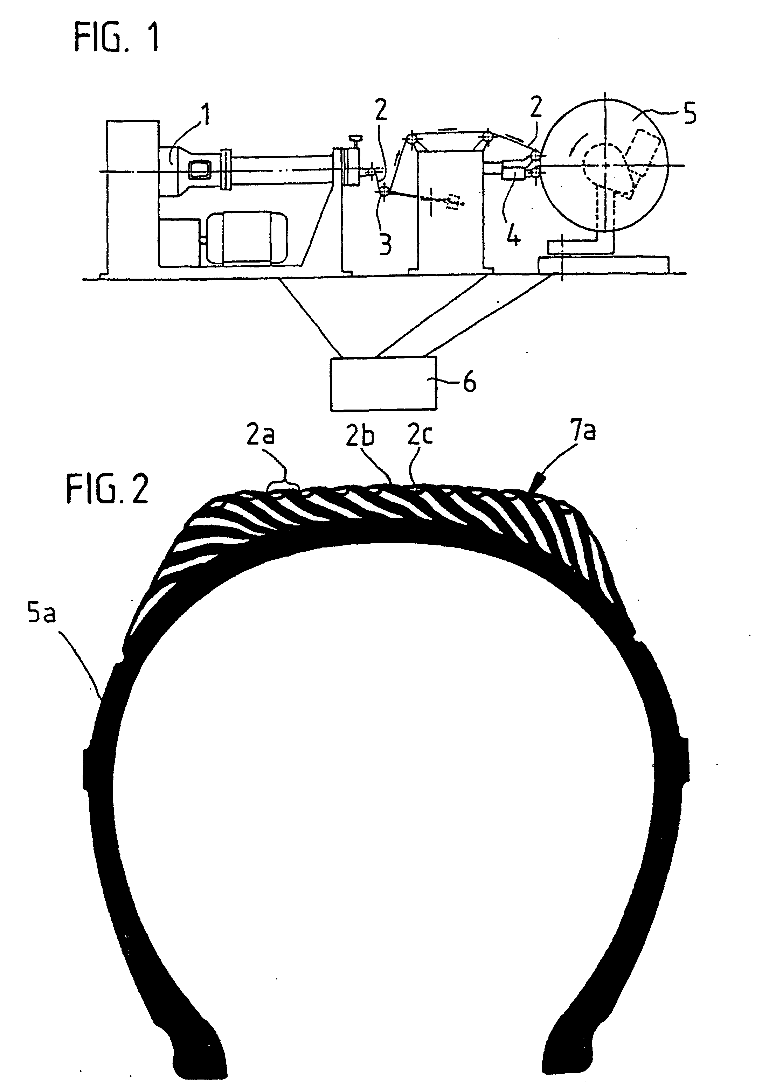

Die Figur 2 verdeutlicht einen Querschnitt eines durch das erfindungsgemäße Verfahren hergestellten vulkanisierten Fahrzeugluftreifen. Die Lauffläche 7a wurde auf den Teilreifen 5 nach dem Verfahren nach Fig. 1 aufgebracht. Nach der Vulkanisation weist die Bodenaufstandsfläche einen aus dem Materialstreifen 2a aufgebauten Laufstreifen auf. Der Materialsteifen 2a besteht aus zwei Schichten (2b und 2c), wobei die Schicht 2c im vulkanisierten Zustand eine um ca. 5 % höhere Härte aufweist als die Schicht 2b. Dieser Sachverhalt wird in der Figur 2 in der Art verdeutlicht, dass die Schicht, die eine höhere Härte aufweist (Schicht 2c) im Fahrbetrieb schneller abgefahren werden kann und somit eine Bodenaufstandsfläche erzielt wird, die in ihrer axialen Erstreckung altemierend Bereiche mit unterschiedlichen Härteverhältnissen aufweisen.

Mit diesem erfindungsgemäßen Verfahren werden Fahrzeugluftreifen erzeugt, die optimale Haftungseigenschaften aufweisen. Diese Fahrzeugluftreifen können verfahrenstechnisch unkompliziert und kostengünstig hergestellt werden, sowohl als Neureifen als auch als runderneuerte Reifen.

## Patentansprüche

1. Verfahren zum Herstellen eines Fahrzeugluftreifens, bei dem zum Erzeugen und Auflegen eines vorzugsweise unvulkanisierten Laufstreifens auf einen Teilreifen (5), der bereits eine bombierte Karkasse sowie radial außen davon ein Gürtelpaket aufweist, zumindest ein Materialstreifen (2, 2a) aus Kautschuk und/oder Kunststoff in zahlreichen im wesentlichen aneinander liegenden in Reifenumfangsrichtung verlaufenden Windungen auf den Teilreifen (5) gewickelt wird, wobei zumindest ein Materialstreifen (2, 2a) verwendet wird, durch den in Reifenquerrichtung zumindest zwei Zonen erzeugt werden, deren Trennflächen in der Laufstreifenoberfläche (7a) münden, wobei eine Zone im vulkanisierten Zustand eine höhere Härte aufweist als die andere,
**dadurch gekennzeichnet, daß**
der Materialstreifen (2, 2a) aus zumindest zwei Schichten (2b, 2c) in seiner Längsrichtung aufgebaut ist, wobei eine Schicht (2c) im vulkanisierten Zustand eine höhere Härte aufweist als die andere Schicht (2b).

2. Verfahren zum Herstellen eines Laufstreifen/Gürtelpaketringes, der auf einen Teilreifen (5), der bereits eine bombierte Karkasse aufweist, aufgelegt wird, das in Kautschuk gebettete Festigkeitsträger enthält, **dadurch gekennzeichnet, daß** zumindest ein Materialstreifen (2, 2a) aus Kautschuk und/oder Kunststoff in zahlreichen im wesentlichen aneinanderliegenden in Gürtelpaketumfangsrichtung verlaufenden Windungen auf das Gürtelringpaket gewickelt wird, durch den in Gürtelpaketquerrichtung zumindest zwei Zonen erzeugt werden, deren Trennflächen in der Laufstreifenoberfläche (7a) münden, wobei eine Zone im vulkanisierten Zustand eine höhere Härte aufweist als die andere, und wobei.der Materialstreifen (2, 2a) aus zumindest zwei Schichten (2b, 2c) in seiner Längsrichtung aufgebaut ist, wobei eine Schicht (2c) im vulkanisierten Zustand eine höhere Härte aufweist als die andere Schicht (2b).

3. Verfahren nach Anspruch 1 oder 2, **dadurch gekennzeichnet, dass** ein vor- oder ausvulkanisierter Teilreifen (5) verwendet wird.

4. Verfahren nach Anspruch 1 oder 2, **dadurch gekennzeichnet, dass** ein unvulkanisierter Teilreifen (5) verwendet wird.

5. Verfahren nach zumindest einem der vorhergehenden Ansprüche, **dadurch gekennzeichnet, dass** zumindest ein vorvulkanisierter Materialstreifen (2, 2a) eingesetzt wird.

6. Verfahren nach zumindest einem der vorhergehenden Ansprüche, **dadurch gekennzeichnet, dass** der Materialstreifen (2, 2a) mittels Extrusions erzeugt wird.

## Claims

1. Method of producing a pneumatic vehicle tyre, wherein, to produce and apply a preferably unvulcanised tread strip to a partial tyre (5), which already has an end-closed carcase as well as a belt bundle radially externally of said carcase, at least one material strip (2, 2a), formed from rubber and/or plastics material, is wound onto the partial tyre (5) in numerous windings, which substantially abut against one another and extend in the circumferential direction of the tyre, at least one material strip (2, 2a) being used, through which at least two zones are produced when viewed with respect to the transverse direction of the tyre, the parting faces of said zones terminating in the tread strip surface (7a), one zone in the vulcanised state having a greater hardness than the other zone, **characterised in that** the material strip (2, 2a) is constructed from at least two layers (2b, 2c) when viewed with respect to its longitudinal direction, one layer (2c) having, in the vulcanised state, a greater hardness than the other layer (2b).

2. Method of producing a tread strip/belt bundle ring, which is applied to a partial tyre (5), which already has an end-closed carcase, which includes reinforcing members embedded in rubber, **characterised in that** at least one material strip (2, 2a), formed from rubber and/or plastics material, is wound onto the belt ring bundle in numerous windings, which substantially abut against one another and extend in the circumferential direction of the belt bundle, at least two zones being produced by said bundle, when viewed with respect to the transverse direction of the belt bundle, the parting faces of said zones terminating in the tread strip surface (7a), one zone in the vulcanised state having a greater hardness than the other zone, and the material strip (2, 2a) being constructed from at least two layers (2b, 2c) when viewed with respect to its longitudinal direction, one layer (2c) having, in the vulcanised state, a greater hardness than the other layer (2b).

3. Method according to claim 1 or 2, **characterised in that** a prevulcanised or fully vulcanised partial tyre (5) is used.

4. Method according to claim 1 or 2, **characterised in that** an unvulcanised partial tyre (5) is used.

5. Method according to at least one of the preceding claims, **characterised in that** at least one prevulcanised material strip (2, 2a) is used.

6. Method according to at least one of the preceding claims, **characterised in that** the material strip (2, 2a) is produced by means of extrusion.

## Revendications

1. Procédé de fabrication d'un pneumatique de véhicule, dans lequel, pour produire et appliquer une bande de roulement, de préférence non vulcanisée, sur un pneu partiel (5) qui comprend déjà une carcasse bombée ainsi qu'un paquet de ceintures s'étendant vers l'extérieur radialement à partir de cette carcasse, au moins une bande de matériau (2, 2a) en caoutchouc et/ou en matière plastique est enroulée sur le pneu partiel (5) en de nombreux tours s'étendant dans la direction circonférentielle du pneumatique et disposés pratiquement les uns à côté des autres, où est utilisée au moins une bande de matériau (2, 2a) au moyen de laquelle au moins deux zones sont produites dans la direction transversale du pneumatique, zones dont les surfaces de séparation débouchent dans la surface (7a) de la bande de roulement, où une zone présente, à l'état vulcanisé, une plus grande dureté que l'autre zone,
**caractérisé en ce que** la bande de matériau (2, 2a) est constituée, dans sa direction longitudinale, d'au moins deux couches (2b, 2c) où une couche (2c) présente, à l'état vulcanisé, une plus grande dureté que l'autre couche (2b).

2. Procédé de fabrication d'une bande de roulement / d'un de paquet annulaire de ceintures qui est appliqué(e) sur un pneu partiel (5) qui comprend déjà une carcasse bombée, laquelle bande de roulement et ou lequel paquet annulaire de ceintures contient des nappes de renfort enrobées de caoutchouc,
**caractérisé en ce qu'**au moins une bande de matériau (2, 2a) en caoutchouc et/ou en matière plastique est enroulée sur le paquet annulaire de ceintures, en de nombreux tours s'étendant dans la direction circonférentielle du paquet de ceintures et disposés en étant pratiquement les uns à côté des autres, bande de matériau au moyen de laquelle sont produites au moins deux zones dans la direction transversale du paquet de ceintures, zones dont les surfaces de séparation débouchent dans la surface (7a) de la bande de roulement, où une zone présente, à l'état vulcanisé, une plus grande dureté que l'autre zone, et où la bande de matériau (2, 2a) est constituée, dans sa direction longitudinale, d'au moins deux couches (2b, 2c), où une couche (2c) présente, à l'état vulcanisé, une plus grande dureté que l'autre couche (2b).

3. Procédé selon la revendication 1 ou 2, **caractérisé en ce que** l'on utilise un pneu partiel (5) prévulcanisé ou complètement vulcanisé.

4. Procédé selon la revendication 1 ou 2, **caractérisé en ce que** l'on utilise un pneu partiel (5) non vulcanisé.

5. Procédé selon au moins l'une quelconque des revendications précédentes, **caractérisé en ce que** l'on utilise au moins une bande de matériau prévulcanisée (2, 2a).

6. Procédé selon au moins l'une quelconque des revendications précédentes, **caractérisé en ce que** la bande de matériau (2, 2a) est produite par extrusion.
